# EUROPÄISCHE PATENTSCHRIFT

(11) **EP 1 316 002 B1**
(45) Veröffentlichungstag und Bekanntmachung des Hinweises auf die Patenterteilung: **16.07.2008**
(21) Anmeldenummer: 01965042.3
(22) Anmeldetag: 27.06.2001
(51) Int. Cl.: G05B 19/4093

(54) **VORRICHTUNG UND VERFAHREN ZUR STEUERUNG EINER WERKZEUGMASCHINE**
DEVICE AND METHOD FOR CONTROLLING A MACHINE TOOL
DISPOSITIF ET PROCEDE DE COMMANDE D'UNE MACHINE-OUTIL

(30) Priorität: 13.07.2000 DE 10034079
(43) Veröffentlichungstag der Anmeldung: 04.06.2003
(73) Patentinhaber: Dr. Johannes Heidenhain GmbH, 83292 Traunreut (DE)
(72) Erfinder: RUTKOWSKI, Christian, 83278 Traunstein (DE)
(86) Internationale Anmeldenummer: PCT/EP2001/007319
(87) Internationale Veröffentlichungsnummer: WO 2002/006907

(56) Entgegenhaltungen:
- DE-A- 4 039 132
- DE-A- 19 801 541
- US-A- 5 050 088
- HAPPERSBERGER G: "AUFBAU EINER WERKZEUGDATENBANK FUR DIE NC-PROGRAMMIERUNG IM DNC-VERBUND" VDI Z,DE,VDI VERLAG GMBH. DUSSELDORF, Bd. 131, Nr. 9, 1. September 1989 (1989-09-01), Seiten 49-53, XP000070500 ISSN: 0042-1766
- SAAR A ET AL: "RATIONALISIERUNG DURCH EINSATZ VON WERKZEUG-DATENBANKEN" WERKSTATT UND BETRIEB,DE,CARL HANSER VERLAG. MUNCHEN, Bd. 121, Nr. 3, 1. März 1988 (1988-03-01), Seiten 246-248, XP000104562 ISSN: 0043-2792

## Beschreibung

Die vorliegende Erfindung betrifft eine Vorrichtung sowie ein Verfahren zur Steuerung einer Werkzeugmaschine.

Zur Werkstückbearbeitung auf einer numerisch gesteuerten Werkzeugmaschine sind mitunter Zusatzdaten erforderlich, die in tabellarischer Form in Dateien außerhalb des eigentlichen Bearbeitungsprogrammes bzw. NC-Programmes abgespeichert sind. Bei derartigen Zusatzdaten kann es sich beispielsweise um Daten bzgl. der Werkzeuggeometrie oder aber um Korrekturwerte bzgl. der Werkzeuggeometrie handeln, die aus einer Werkstückvermessung gewonnen wurden. Die Art und Struktur bzw. Organisation dieser Zusatzdaten in einer Datei ist in der Regel von der jeweiligen Bearbeitungstechnologie und mitunter sogar vom jeweiligen Werkzeugmaschinentyp abhängig. Es existiert demnach ein große Vielfalt in Bezug auf die Art und Struktur derartiger Zusatzdaten in den entsprechenden Dateien.

Eine Werkzeugdatenbank dieser Art ist in der Veröffentlichung von G.Happersberger:" Aufbau einer Werkzeugdatenbank für die NC-Programmierung im DNC-Verbund", VDI-Zeitschrift, VDI Verlag GMBH, Düsseldorf, DE, Vol. 131, Nr. 9, auf den Seiten 49 - 53 offenbart. Auf der Seite 53, Spalte Mitte wird auch ein Datenbankzugriff bei laufender Fertigung über SQL-Routinen angesprochen, aber nicht näher erläutert.

Während der Abarbeitung des jeweiligen Bearbeitungsprogrammes für eine bestimmte Bearbeitungsaufgabe kann nunmehr der Zugriff auf die Zusatzdaten aus dem Bearbeitungsprogramm heraus erforderlich werden. Beispielsweise kann das Einlesen von Werkzeugkorrekturdaten nötig sein, um eine entsprechende Werkzeugradiuskorrektur auf Basis des eingelesenen Daten vorzunehmen. Hierzu ist es wiederum erforderlich, dass die Struktur der abgefragten Zusatzdaten bzw. die konkrete Organisation der entsprechenden Datenbank bereits zum Zeitpunkt der Erstellung der Steuerungs-Software bekannt ist und nicht erst zum Zeitpunkt der Erstellung des Bearbeitungsprogrammes. Dies bedeutet, dass der jeweilige Steuerungs-Hersteller die zugehörigen Datenbank-Strukturen bereits beim Erstellen der Steuerungs-Software kennen und berücksichtigen muss. So muss beispielsweise schon zu diesem Zeitpunkt bekannt sein, in welcher Zeile und/oder Spalte bzw. Zelle einer derartigen Datenbank bestimmte Zusatzdaten zu finden sind. Die Verwendung einer Datei mit einer Zusatzdaten-Struktur bzw. Zusatzdaten-Organisation, die von der ursprünglich berücksichtigten Struktur abweicht, ist dann später nicht mehr möglich. Die derart erstellte Steuerungs-Software ist demzufolge nicht mehr unabhängig von einer bestimmten Bearbeitungstechnologie oder unabhängig von einem speziellen Werkzeugmaschinentyp einzusetzen.

Aufgabe der vorliegenden Erfindung ist es daher, eine Vorrichtung sowie ein Verfahren zur Steuerung einer Werkzeugmaschine anzugeben, mit dem die flexible Nutzung beliebig organisierter Zusatzdaten aus einem Bearbeitungsprogramm heraus möglich ist, ohne dass die konkrete Organisation bzw. Struktur der Zusatzdaten im vorhinein bereits bekannt ist, insbesondere bereits zum Zeitpunkt der Erstellung der Steuerungs-Software.

Diese Aufgabe wird gelöst durch eine Vorrichtung mit den Merkmalen des Anspruches 1.

Vorteilhafte Ausführungsformen der erfindungsgemäßen Vorrichtung ergeben sich aus den Maßnahmen, die in den von Anspruch 1 abhängigen Patentansprüchen aufgeführt sind.

Ferner wird die oben aufgeführte Aufgabe durch ein Verfahren mit den Merkmalen des Anspruches 10 gelöst.

Vorteilhafte Ausführungsformen des erfindungsgemäßen Verfahrens ergeben sich aus den Maßnahmen, die in den von Anspruch 10 abhängigen Patentansprüchen aufgeführt sind.

Die erfindungsgemäßen Maßnahmen gewährleisten nunmehr, dass aus einem Bearbeitungsprogramm heraus Zusatzdaten aus einer Datenbank abgefragt werden können, ohne dass die konkrete Art und Struktur der Datenbank und der darin abgelegten Zusatzdaten bereits bei der Erstellung der Steuerungs-Software bekannt sein muss. Erst bei der Erstellung des eigentlichen Bearbeitungsprogrammes an der jeweiligen Maschine ist die Kenntniss der entsprechenden Datenbank und deren konkreter Organisation erforderlich. Es ist somit gewährleistet, dass sich die einmal erstellte Steuerungs-Software flexibel für unterschiedlichste Bearbeitungstechnologien und/oder unterschiedlichste Werkzeugmaschinentypen einsetzen lässt, die in Verbindung mit verschiedenartig organisierten Zusatzdaten arbeiten.

In einer besonders vorteilhaften Ausführungsform der vorliegenden Erfindung werden im jeweiligen Bearbeitungsprogramm zum Abrufen von Zusatzdaten aus einer derartigen Datenbank Datenbank-Zugriffsbefehle verwendet, die auf der Datenbank-Sprache SQL oder einer anderen standardisierten Datenbank-Sprache basieren.

In Bezug auf die jeweilige Datenbank, in der der die Zusatzdaten abgespeichert sind, existieren vielfältigste Ausführungsformen. So kann diese etwa räumlich getrennt von der jeweiligen Maschine bzw. vom jeweiligen Bearbeitungsprogramm abgespeichert sein; ebenso kann diese aber auch lokal mit dem Bearbeitungspogramm abgespeichert werden usw..

Weitere Vorteile sowie Einzelheiten der vorliegenden Erfindung ergeben sich aus der nachfolgenden Beschreibung der beiliegenden Figuren.

Dabei zeigt
- Figur 1: eine stark schematisierte Blockschaltbild-Darstellung eines Ausführungsbeispieles der erfindungsgemäßen Vorrichtung;
- Figur 2: einen Auszug aus einem Bearbeitungsprogramm, der Befehle zum Einlesen von Zusatzdaten umfasst.

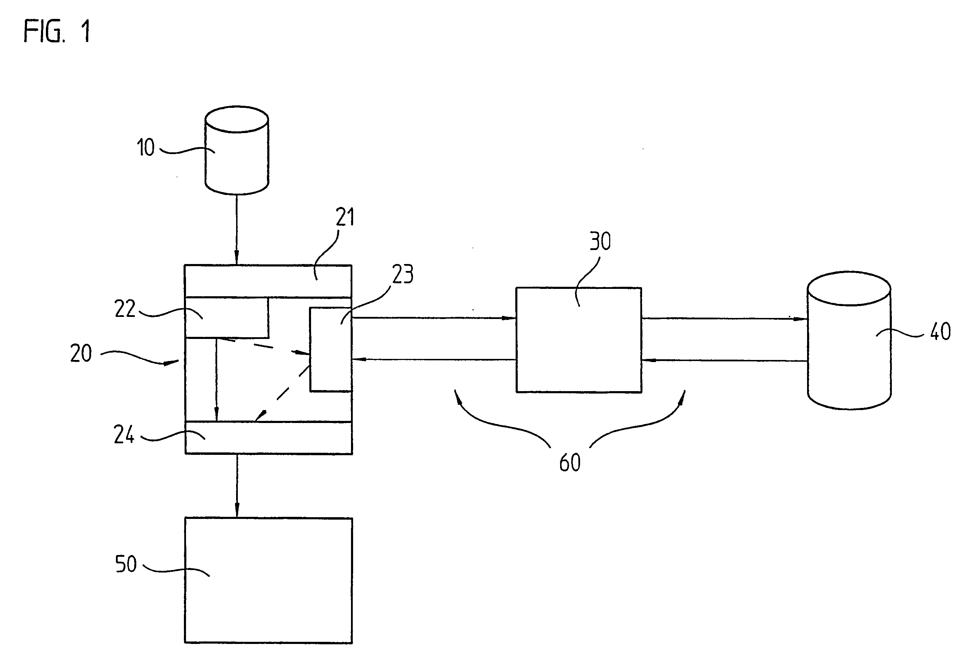

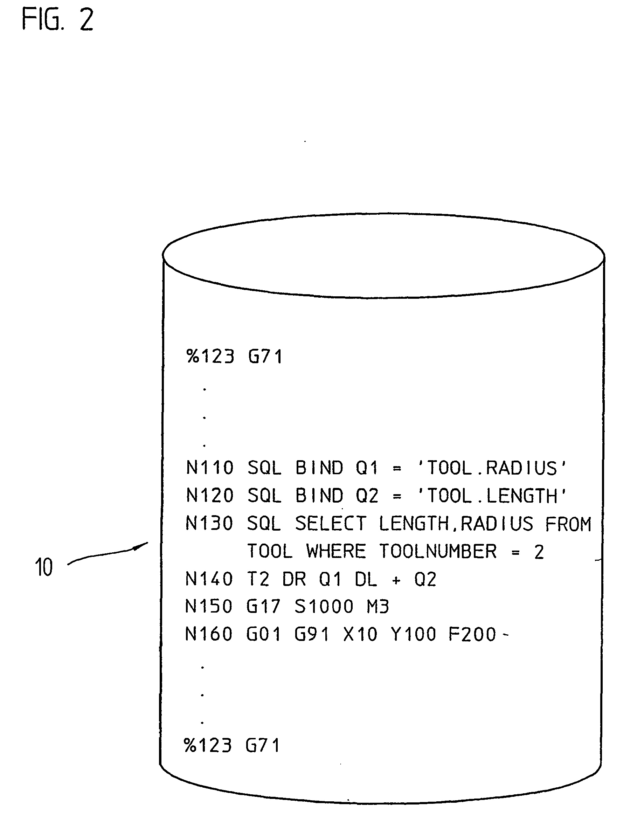

Anhand der beiden Figuren 1 und 2 sei nachfolgend die erfindungsgemäße Vorrichtung sowie das erfindungsgemäße Verfahren erläutert. Figur 1 zeigt hierbei in stark schematisierter Form eine mögliche Ausführungsform der erfindungsgemäßen Vorrichtung, die zur numerischen Steuerung einer Werkzeugmaschine geeignet ist. Die erfindungsgemäße Vorrichtung umfasst i.w. eine Verarbeitungseinheit 20 mit verschiedenen Funktionseinheiten sowie eine Datenbank 40. Auf die Funktionen der verschiedenen Komponenten wird im Verlauf der weiteren Beschreibung noch näher eingegangen.

Die Datenbank 40 ist im vorliegenden Beispiel räumlich getrennt von der Verarbeitungseinheit 20 angeordnet und mit dieser über einen Kommunikationskanal 60 verbunden, über den Daten zwischen der Verarbeitungseinheit 20 und der Datenbank 40 ausgetauscht werden. Der Kommunikationskanal 60 kann in vielfältiger Art und Weise realisiert werden, etwa in Form einer Netzwerk- oder Busverbindung ebenso wie als Internetverbindung usw.. Alternativ hierzu kann die Datenbank 40 aber auch grundsätzlich in unmittelbarer Nähe der Verarbeitungseinheit 20 angeordnet sein.

In der Datenbank 40 sind wie eingangs erläutert Zusatzdaten abgelegt, die zur Werkstückbearbeitung erforderlich sind. Hierbei kann es sich um vielfältigste Arten von Zusatzdaten handeln, wie z.B. die bereits erwähnten Werkzeugkorrekturdaten, sonstige Zusatzdaten zur Werkzeuggeometrie und/ oder Zusatzdaten bzgl. eines bestimmten Werkzeugmaschinentyps etc..

Wichtig für die vorliegende Erfindung ist nunmehr, dass die Zusatzdaten bzw. die Datenbank 40 beliebig organisiert sein kann, d.h. insbesondere bei der Erstellung der Steuerungs-Software ist die Kenntniss der konkreten zeilen- oder tabellenweisen Organisation der Datenbank 40 nicht erforderlich. Nötig ist zu diesem Zeitpunkt dann lediglich die Kenntniss der logischen Struktur der jeweiligen Datenbank 40, d.h. welche Art von Daten letztlich aus der Datenbank abzufragen sind. Die entsprechende Datenbank kann demzufolge ebenso als tabellarisch organisierte Datei wie auch als kommerziell verfügbares Datenbanksystem ausgebildet sein. Es ist möglich, an dieser Stelle etwa die Datenbank 40 eines Werkzeugherstellers einzusetzen, in der dieser bestimmte Korrekturdaten abgelegt hat. Im Verlauf der Werkstückbearbeitung werden die Zusatzdaten benötigt, um programmseitig eine Werkzeugkorrektur zu berücksichtigen.

Neben der Kenntniss der logischen Struktur der Datenbank ist bei der Erstellung der Steuerungssoftware lediglich noch die Kenntniss des Protokolles im Kommunikationskanal 60 erforderlich, über das der Datentransfer mit der Datenbank 40 abgewickelt wird.

Die entsprechende Datenbank 40 kann ähnlich wie der Kommunikationskanal 60 physikalisch in vielfältiger Form ausgebildet sein. Dies bedeutet, dass als Speichermedium für die Datenbank 40 grundsätzlich alle üblichen Speichermedien wie Festplattenlaufwerke, CD-ROMs etc. zur Verfügung stehen. Desweiteren kann die Datenbank aus ein oder mehreren Tabellen mit entsprechenden Zeilen- und Spaltenstrukturen bestehen.

Mit dem Bezugszeichen 10 ist in Figur 1 desweiteren das Bearbeitungsprogramm bzw. das jeweilige NC-Programm bezeichnet, das im Verlauf der Werkstückbearbeitung von der Verarbeitungseinheit 20 abgearbeitet wird. Erfindungsgemäß ist vorgesehen, dass das Bearbeitungsprogramm 10 neben den üblichen Bearbeitungsanweisungen in Form von NC-Satzanweisungen zusätzlich noch Datenbank-Zugriffsbefehle umfasst. Über die Datenbank-Zugriffsbefehle ist hierbei u.a. aus dem Bearbeitungsprogramm 10 heraus der gezielte Zugriff auf die Zusatzdaten in der Datenbank 40 möglich, wenn dies im Verlauf der Werkstückbearbeitung erforderlich sein sollte. Desweiteren erfolgt über die Datenbank-Zugriffsbefehle im Bearbeitungsprogramm 10 die Zuordnung der jeweils abgefragten Zusatzdaten zu einer Variable des Bearbeitungsprogrammes 10. Alternativ kann darüber auch eine Zuordnung der jeweils abgefragten Zusatzdaten zu internen Variablen der Steuerungssoftware erfolgen. In allen Fällen lässt sich über eine derartige Zuordnung die Funktion des Bearbeitungsprogrammes 10 an dieser Stelle gezielt beeinflussen.

Um den Zugriff auf die Zusatzdaten der beliebig organisierten Datenbank 40 zu gewährleisten, sind bestimmte erfindungsgemäße Maßnahmen auf Seiten der Verarbeitungseinheit 20 nötig, die nachfolgend erläutert seien. Für den Zugriff aus dem Bearbeitungsprogramm 10 auf die Zusatzdaten ist im Zusammenhang mit den Datenbank-Zugriffsbefehlen nunmehr nicht mehr die explizite Kenntniss der konkreten Datenbank-Organisation nötig. Als Datenbank-Zugriffsbefehle im Bearbeitungsprogramm 10 dienen vielmehr Befehle aus einer standardisierten Datenbank-Sprache, wie etwa SQL, die es ermöglichen aus einer Datenbank Daten auszulesen, ohne die konkrete Struktur der Tabelle kennen zu müssen.

Zur Verarbeitung des Bearbeitungsprogrammes 10 weist die Verarbeitungseinheit 20 eine Eingangsschnittstelle 21 für das Bearbeitungsprogramm 10 auf. Der Eingangsschnittstelle 21 nachgeordnet ist eine Interpretereinheit 22 auf Seiten der Verarbeitungseinheit angeordnet. Die Interpretereinheit 22 übernimmt neben der Abarbeitung der üblichen NC-Sätze im Bearbeitungsprogramm 10 ferner noch die korrekte Verarbeitung der Datenbank-Zugriffsbefehle, die ebenfalls im Bearbeitungsprogramm enthalten 10 sind. So werden von der Interpretereinheit 22 die Datenbank-Zugriffsbefehle als solche identifiziert und von der Interpretereinheit 22 das Abrufen von Zusatzdaten aus der Datenbank 40 über eine Datenbank-Schnittstelle 23 in der Verarbeitungseinheit 20 organisiert. Derart abgerufene Zusatzdaten werden daraufhin einer Umsetzeinheit 24 zugeführt, die die Zusatzdaten im weiteren Bearbeitungsverlauf zur Abarbeitung des Bearbeitungsprogrammes 10 verwendet.
Üblicherweise sind die vorab erläuterten Funktionseinheiten der Verarbeitungseinheit 20, wie die verschiedenen Schnittstellen 21, 23 sowie die Interpretereinheit 22 und die Umsetzeinheit 24 softwaremäßig ausgebildet.

Der Verarbeitungseinheit 20 nachgeordnet ist lediglich noch der Block 50 dargestellt, der die damit gesteuerte Werkzeugmaschine veranschaulichen soll.

In Figur 1 ist neben den bislang erläuterten Komponenten eine über den Kommunikationskanal 60 angebundene Datenbankverwaltungseinheit 30 schematisch angedeutet. Über die Datenbankverwaltungseinheit 30 wird der Datenaustausch zwischen der Verarbeitungseinheit 20 und der Datenbank 40 organisiert. Konkret bedeutet dies, dass die Datenbankverwaltungseinheit 30 über die standardisierten Datenbank-Zugriffsbefehle angesprochen wird und entsprechend den Datenbank-Zugriffsbefehlen die angeforderten Zusatzdaten aus der Datenbank 40 abgefragt werden. Die derart abgefragten Zusatzdaten werden dann von der Datenbankverwaltungseinheit 30 der Verarbeitungseinheit 20, respektive der Umsetzeinheit 24, zur Weiterverarbeitung zur Verfügung gestellt.
Neben dem erläuterten Lese-Zugriff auf die Daten der Datenbank 40 ist selbstverständlich auch ein Schreib-Zugriff auf die Datenbank 40 möglich. So kann beispielsweise ein Werkzeug vermessen werden und die derart generierten Daten als neue Korrekturdaten in eine entsprechende Datenbank geschrieben werden. Auch ein derartiger Schreib-Zugriff auf die Datenbank 40 wird über die Datenbankverwaltungseinheit 30 organisiert.
In einer möglichen Ausführungsform ist die Datenbankverwaltungseinheit 30 etwa als SQL-Server ausgebildet.

In Figur 2 ist ein Beispiel eines Teiles eines Bearbeitungsprogrammes 10 gezeigt, der zwischen den Programmzeilen N110 und N160 insbesondere mehrere Datenbank-Zugriffsbefehle umfasst, über die Zusatzdaten aus einer Datenbank abgefragt und zur Weiterverarbeitung bereit gestellt werden sollen.

In den beiden Programmzeilen N110 und N120 erfolgt zunächst die Zuordnung von Daten aus der abzufragenden Datenbank TOOL zu Variablen Q1, Q2 des Bearbeitungsprogrammes 10. So wird über die Programmzeile N110 ein Wert aus der Datenbankspalte "Radius" mit der Variablen Q1 verknüpft; über die Programmzeile N120 erfolgt die Verknüpfung eines Wertes aus der Datenbankspalte "Länge" mit der Variablen Q2.

Über die folgende Programmzeile N130 werden Werte für Länge und Radius des Werkzeugtyps Nr. 2 aus der Datenbank TOOL gelesen.

Über die Programmzeile N140 wird schließlich die Einwechslung des Werkzeuges Nr. 2 veranlasst und die aus der Datenbank TOOL gelesenen Aufmaße Q1 für den Radius und Q2 für die Länge berücksichtigt.

Über die nachfolgenden Programmzeilen N150 etc. wird in üblicher Weise das Bearbeitungsprogramm 10 vorgegeben.

Analog zu diesem Beispiel erfolgt in erfindungsgemäßer Art und Weise der Zugriff auf Daten aus beliebig organisierten Datenbanken.

## Patentansprüche

1. Vorrichtung zur Steuerung einer Werkzeugmaschine, wobei die Vorrichtung folgende Komponenten umfasst:
a) mindestens eine Datenbank (40) mit Zusatzdaten, die zur Werkstückbearbeitung erforderlich sind, wobei die Datenbank (40) beliebig organisiert ist,
b) eine Verarbeitungseinheit (20), die folgende Funktionseinheiten aufweist:
b1) eine Eingangs-Schnittstelle (21) für ein Bearbeitungsprogramm (10), das zur Steuerung der Werkzeugmaschine (50) während der Werkstückbearbeitung geeignet ist, wobei das Bearbeitungsprogramm (10) auch Datenbank-Zugriffsbefehle in einer standardisierten Datenbanksprache umfasst,
b2) eine Datenbank-Schnittstelle (23) zur Datenbank (40),
b3) eine Interpretereinheit (22), welche die Datenbank-Zugriffsbefehle im Bearbeitungsprogramm (10) derart verarbeitet, dass darüber benötigte Zusatzdaten aus der Datenbank (40) abrufbar sind, wobei von der Interpretereinheit (22) die Datenbank-Zugriffsbefehle als solche identifiziert werden und von der Interpretereinheit (22) das Abrufen von Zusatzdaten aus der Datenbank (40) über die Datenbank-Schnittstelle (23) in die Verarbeitungseinheit (20) organisiert wird.
b4) eine Umsetzeinheit (24), die die aus der Datenbank (40) abgerufenen Zusatzdaten im weiteren Bearbeitungsverlauf zur Abarbeitung des Bearbeitungsprogrammes (10) verwendet.

2. Vorrichtung nach Anspruch 1, wobei über eine Kommunikationskanal (60) zwischen der Datenbank (40) und der Datenbank-Schnittstelle (23) eine Datenbankverwaltungseinheit (30) angebunden ist, die den Datenaustausch zwischen der Verarbeitungseinheit (20) und der Datenbank (40) organisiert.

3. Vorrichtung nach Anspruch 2, wobei die Datenbankverwaltungseinheit (30) derart ausgebildet ist, dass diese über die Datenbank-Zugriffsbefehle von Seiten der Verarbeitungseinheit (20) ansprechbar ist, entsprechend den Datenbank-Zugriffsbefehlen die angeforderten Zusatzdaten aus der Datenbank (40) abfrägt und die jeweiligen Zusatzdaten der Umsetzeinheit (23) zur Weiterverarbeitung zur Verfügung stellt.

4. Vorrichtung nach Anspruch 3, wobei die Datenbankverwaltungseinheit (30) als SQL-Server ausgebildet ist.

5. Vorrichtung nach Anspruch 2, wobei der Kommunikationskanal (60) einen bidirektionalen Datenaustausch zwischen der Datenbank (40) und der Verarbeitungseinheit (20) ermöglicht.

6. Vorrichtung nach Anspruch 1, wobei die Interpretereinheit (23) software-mäßig ausgebildet ist.

7. Vorrichtung nach Anspruch 1, wobei die Datenbank (40) räumlich getrennt von der Verarbeitungseinheit (20) angeordnet ist.

8. Vorrichtung nach Anspruch 1, wobei die Datenbank (40) eine Zeilen- und Spaltenstruktur aufweist.

9. Vorrichtung nach Anspruch 1, wobei die in der Datenbank (40) abgelegten Zusatzdaten die Werkzeuggeometrie und/oder einen bestimmten Werkzeugmaschinentyp betreffen.

10. Verfahren zur Steuerung einer Werkzeugmaschine, wobei hierzu mindestens eine beliebig organisierte Datenbank (40) mit Zusatzdaten für die Werkstückbearbeitung eingesetzt wird und während der Abarbeitung eines Bearbeitungsprogrammes (10) mittels einer Verarbeitungseinheit (20) eine Interpretereinheit (22) Datenbank-Zugriffsbefehle in einer standardisierten Datenbanksproche im Bearbeitungsprogramm (10) derart verarbeitet, dass darüber benötigte Zusatzdaten zur weiteren Werkstückbearbeitung aus der Datenbank (40) abgerufen werden, wobei von der Interpretereinheit (22) die Datenbank-Zugriffsbefehle als solche identifiziert werden und von der Interpretereinheit (22) das Abrufen von Zusatzdaten aus der Datenhank (40) über die Datenbank-Schnittstelle (23) in die Verarbeitungseinheit (20) organisiert wird.

11. Verfahren nach Anspruch 10, wobei die Anforderung und der Austausch von Zusatzdaten zwischen der Verarbeitungseinheit (20) und der Datenbank 40() über einen Kommunikationkanal (60) zwischen der Verarbeitungseinheit (20) und der Datenbank (40) erfolgt und über den Kommunikationskanal (60) eine Datenbankverwaltungseinheit (30) angebunden ist, über die der Datenaustausch zwischen der Verarbeitungseinheit (20) und der Datenbank (40) organisiert wird.

12. Verfahren nach Anspruch 11, wobei die Datenbankverwaltungseinheit (30) über die Datenbank-Zugriffsbefehle von Seiten der Verarbeitungseinheit (20) angesprochen wird, entsprechend den Datenbank-Zugriffsbefehlen die angeforderten Zusatzdaten aus der Datenbank (40) über die Kommunikationseinheit (30) abgefragt werden und die jeweiligen Zusatzdaten einer Umsetzeinheit (24) von der Kommunikationseinheit (30) zur Weiterverarbeitung zur Verfügung gestellt werden.

13. Verfahren nach Anspruch 12, wobei als Datenbankverwaltungseinheit (30) ein SQL-Server eingesetzt wird.

14. Verfahren nach Anspruch 10, wobei die im Bearbeitungsprogramm (10) enthaltenen Datenbank-Zugriffsbefehle auf der Datenbank-Sprache SQL oder einer anderen standardisierten Datenbank-Sprache basieren, die das Auslesen verschiedenartigster Datenbanken ermöglichen.

15. Verfahren nach Anspruch 10, wobei über die Datenbank-Zugriffsbefehle im Bearbeitungsprogramm (10) eine Zuordnung der abgefragten Zusatzdaten der Datenbank (40) zu Variablen des Bearbeitungsprogrammes (10) vorgenommen wird.

16. Verfahren nach Anspruch 10, wobei die abgerufenen Zusatzdaten aus der Datenbank (40) im Verlauf der weiteren Werkstückbearbeitung zur Parametrierung weiterer Bearbeitungsaufgaben verwendet werden.

## Claims

1. Device for controlling a machine tool, wherein the device comprises the following components:
a) at least one data bank (40) with additional data, which are necessary for workpiece machining, wherein the data bank (40) is randomly organised,
b) a processing unit (20), which has the following function units:
b1) an input interface (21) for a machining program (10), which is suitable for controlling the machine tool (50) during workpiece machining, wherein the machining program (10) also comprises data bank access commands in a standardised data bank language,
b2) a data bank interface (23) to the data bank (40),
b3) an interpreter unit (22), which processes the data bank access commands in the machining program (10) in such a manner that required additional data concerning this can be retrieved from the data bank (40), wherein the data bank access commands are identified as such by the interpreter unit (22) and the retrieval of additional data from the data bank (40) is organised by the interpreter unit (22) into the processing unit (20) via the data bank interface (23),
b4) a conversion unit (24), which uses the additional data retrieved from the data bank (40) in the further course of machining to execute the machining program (10).

2. Device according to claim 1, wherein a data bank management unit (30), which organises the data exchange between the processing unit (20) and the data bank (40), is connected via a communications channel (60) between the data bank (40) and the data bank interface (23).

3. Device according to claim 2, wherein the data bank management unit (30) is configured in such a manner that this can be addressed by the processing unit (20) via the data bank access commands, extracts the requested additional data from the data bank (40) in accordance with the data bank access commands and makes the respective additional data available to the conversion unit (23) for further processing.

4. Device according to claim 3, wherein the data bank management unit (30) is configured as an SQL server.

5. Device according to claim 2, wherein the communications channel (60) allows a bidirectional data exchange between the data bank (40) and the processing unit (20).

6. Device according to claim 1, wherein the interpreter unit (23) is configured in relation to software.

7. Device according to claim 1, wherein the data bank (40) is arranged spatially separate from the processing unit (20).

8. Device according to claim 1, wherein the data bank (40) has a cell and column structure.

9. Device according to claim 1, wherein the additional data filed in the data bank (40) relate to tool geometry and/or a specific machine tool type.

10. Method for controlling a machine tool, wherein for this at least one randomly organised data bank (40) is used with additional data for workpiece machining and during execution of a machining program (10) by means of a processing unit (20), an interpreter unit (22) processes data bank access commands in a standardised data bank language in the machining program (10) in such a manner that required additional data concerning this are retrieved from the data bank (40), wherein the data bank access commands are identified as such by the interpreter unit (22) and the retrieval of additional data from the data bank (40) is organised by the interpreter unit (22) into the processing unit (20) via the data bank interface (23).

11. Method according to claim 10, wherein the requesting and exchange of additional data between the processing unit (20) and the data bank (40) occurs via a communications channel (60) between the processing unit (20) and the data bank (40), and a data bank management unit (30) is connected via the communications channel (60), by means of which the data exchange between the processing unit (20) and the data bank (40) is organised.

12. Method according to claim 11, wherein the data bank management unit (30) is addressed by the processing unit (20) via the data bank access commands, the requested additional data are extracted by means of a communications unit (30) from the data bank (40) in accordance with the data bank access commands and the respective additional data are made available to a conversion unit (23) by the communications unit (30) for further processing.

13. Method according to claim 12, wherein an SQL server is used as data bank management unit (30).

14. Method according to claim 10, wherein the data bank access commands contained in the machining program (10) are based on the SQL data bank language or on another standardised data bank language, which allows a wide variety of data banks to be read.

15. Method according to claim 10, wherein an allocation of the extracted additional data of the data bank (40) to variables of the machining program (10) is undertaken via the data bank access commands in the machining program (10).

16. Method according to claim 10, wherein the extracted additional data from the data bank (40) are used for parameterising further machining tasks in the course of further workpiece machining.

## Revendications

1. Dispositif de commande d'une machine-outil, comprenant les composants suivants :
a) au moins une banque de données (40) avec des données supplémentaires nécessaires à l'usinage de la pièce, cette banque (40) étant organisée de n'importe quelle manière,
b) une unité de traitement (24) présentant les unités fonctionnelles suivantes :
b1) une interface d'entrée (21) pour un programme d'usinage (10) approprié à commander la machine-outil (50) pendant l'usinage de la pièce, ce programme comprenant également des ordres d'accès à la banque de données, donnés dans un langage standardisé de banque de données,
b2) une interface de banque de données (23) avec la banque de données (40),
b3) une unité d'interprétation (22) qui traite les ordres d'accès dans le programme de traitement (10) de manière que les données supplémentaires nécessaires peuvent être demandées à la banque de données (40), l'unité d'interprétation (22) identifiant comme tels les ordres d'accès à la banque de données et organisant dans l'unité de traitement (20) la demande de données supplémentaires adressée à la banque de données (40) par l'intermédiaire de l'interface de banque de données (23),
b4) une unité de conversion (24) qui utilise les données supplémentaires provenant de la banque de données (40) pour, dans la suite de l'usinage, exécuter le programme d'usinage (10).

2. Dispositif selon la revendication 1, dans lequel un canal de communication (60) entre la banque de données (40) et l'interface de banque de données (23) est relié à une unité de gestion de banque de données (30) qui organise l'échange de données entre l'unité de traitement (20) et la banque de données (40).

3. Dispositif selon la revendication 2, **caractérisé en ce que** l'unité de gestion de banque de données (30) est constituée de manière à pouvoir, du côté de l'unité de traitement (20) être actionnée par les ordres d'accès à la banque de données pour, en correspondance avec ces ordres, consulter les données auxiliaires provenant de la banque de données (40) et mettre à la disposition de l'unité de conversion (23) les données additionnelles correspondantes, pour leur traitement ultérieur.

4. Dispositif selon la revendication 3, **caractérisé en ce que** l'unité de gestion de la banque de données (30) est constituée par un serveur SQL.

5. Dispositif selon la revendication 2, **caractérisé en ce que** le canal de communication (60) permet un échange, dans les deux sens, de données entre la banque de données (40) et l'unité de traitement (20).

6. Dispositif selon la revendication 1, **caractérisé en ce que** l'unité d'interprétation (23) est adaptée au software.

7. Dispositif selon la revendication 1, **caractérisé en ce que** la banque de données (40) est séparée, dans l'espace, de l'unité de traitement (20).

8. Dispositif selon la revendication 1, **caractérisé en ce que** la banque de données (40) présente une structure à cellules et fentes.

9. Dispositif selon la revendication 1, **caractérisé en ce que** les données supplémentaires déposées dans la banque de données (40) concernent la géométrie de l'outil et/ou un certain type de machine-outil.

10. Procédé de commande d'une machine-outil, selon lequel est utilisé pour cela au moins une banque de données (40) organisée de n'importe quelle manière, et qui contient des données supplémentaires pour l'usinage de la pièce, avec pendant l'exécution d'un programme d'usinage (10) par une unité de traitement (20), une unité d'interprétation (22) qui traite dans ce programme (10) des ordres d'accès à la banque de données exprimés dans un langage de banque standardisé, de manière que des données nécessaires à la suite de l'usinage sont demandées à la banque de données (40), l'unité d'interprétation (22) identifiant comme tels les ordres d'accès à la banque de données et organisant dans l'unité de traitement (20) la demande de données supplémentaires adressée à la banque de données (40) par l'intermédiaire de l'interface de banque de données (23).

11. Procédé selon la revendication 10, selon lequel la demande et l'échange de données supplémentaires entre l'unité de traitement (20) et la banque de données (40) ont lieu à travers un canal de communication (60) entre l'unité de traitement (20) et la banque de données (40), ce canal étant relié à une unité de gestion de banque de données (30) qui organise l'échange de données entre l'unité de traitement (20) et la banque de données (40).

12. Procédé selon la revendication 11, selon lequel l'unité de gestion de banque de données (30) est actionnée du côté de l'unité de traitement (20) par les ordres d'accès à la banque de données, et en correspondance à ces ordres, les données auxiliaires provenant de la banque de données (40) sont consultées par l'unité de communication (30) et les données supplémentaires correspondantes sont mises à la disposition de l'unité de conversion (23) par l'unité de communication (30), pour leur traitement ultérieur.

13. Procédé selon la revendication 12, selon lequel un serveur SQL est utilisé comme unité de gestion de banque de données.

14. Procédé selon la revendication 10, selon lequel les ordres d'accès à la banque de données contenus dans le programme d'usinage (10) sont basés sur le langage de banque de données SQL ou sur un autre langage standardisé de banque de données, ce qui permet de lire les banques de données les plus diverses.

15. Procédé selon la revendication 10, selon lequel par l'intermédiaire des ordres d'accès à la banque de données, dans le programme d'usinage (10) les données supplémentaires de la banque de données (40) qui ont été consultées, sont affectées à des variables de programme d'usinage (10).

16. Procédé selon la revendication 10, selon lequel les données supplémentaires demandées à la banque de données (40) sont utilisées au cours de l'usinage ultérieur pour paramétrer d'autres opérations d'usinage.
